# FASCICULE DE BREVET EUROPEEN

(11) **EP 1 043 180 B1**
(45) Date de publication et mention de la délivrance du brevet: **05.04.2006**
(21) Numéro de dépôt: 00460027.6
(22) Date de dépôt: 06.04.2000
(51) Int. Cl.: B60J 1/20

(54) **Store à enrouleur à poignée et crochets de fixation indexés, et procédé de fabrication correspondant**
Rollo mit Handgriff und indexiertem Haken, und korrespondierendes Verfahren zur Herstellung
Roller blind with handle and indexed hooks, and process for producing the same

(30) Priorité: 07.04.1999 FR 9904499
(43) Date de publication de la demande: 11.10.2000
(73) Titulaire: WAGON SAS, 79300 Bressuire (FR)
(72) Inventeur: Coudon, Denise, 79302 Bressuire (FR)
(74) Mandataire: Vidon, Patrice

(56) Documents cités:
- GB-A- 2 148 366
- US-A- 2 726 114
- US-A- 5 036 898
- US-A- 5 098 149
- US-A- 5 860 466

## Description

Le domaine de l'invention est celui des stores à enrouleur, destinés à équiper des véhicules automobiles. Plus précisément, l'invention concerne le déploiement et la fixation en position déployée de tels stores.

On utilise depuis longtemps des stores à enrouleur dans les véhicules automobiles, essentiellement pour se protéger des effets du soleil.

Ces stores sont formés classiquement d'un rideau, dont l'une des extrémités est montée sur un rouleau d'enroulement, lui-même entraîné en rotation par des moyens de rappel. Sous l'effet de ces moyens de rappel, le rideau revient naturellement en position reployée.

L'autre extrémité du rideau, dite extrémité libre, comprend des moyens de tirage, qui permettent de déployer le rideau. Cette extrémité libre porte par ailleurs une ou plusieurs poignées, ou pattes de préhension, et un ou plusieurs crochets, qui coopèrent avec un élément d'accrochage correspondant monté sur un véhicule, de façon à retenir le rideau en position déployée.

Généralement, une barre de tirage vient prendre (par exemple pincer) l'extrémité libre du rideau. Là où les poignées de tirage, ainsi que le ou les crochets de fixation, sont montés sur cette barre de tirage.

Un store à enrouleur comprenant les caractéristiques du préambule de la revendication 1 est connu du document US-A-5 860 466.

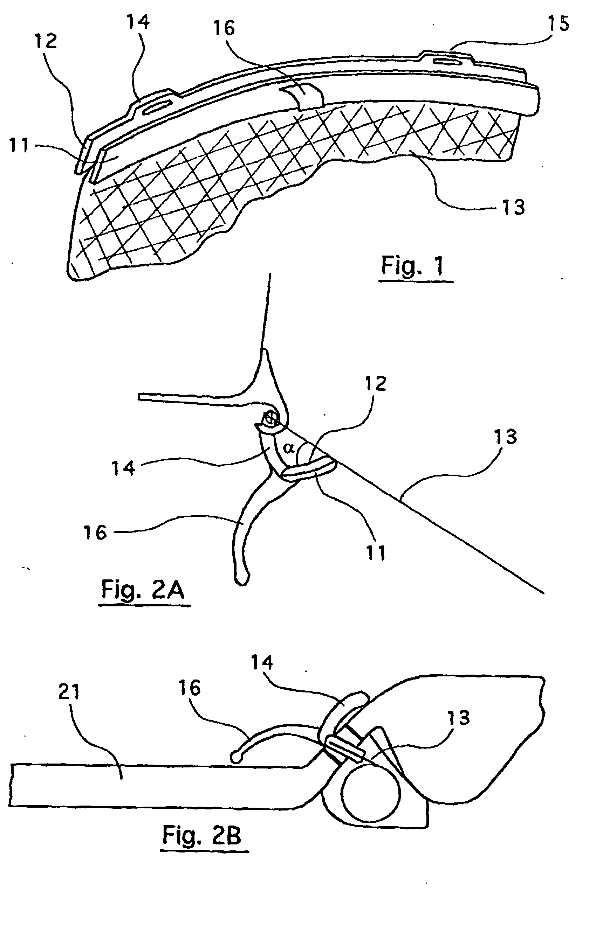

Un exemple de dispositif de ce type est illustré en figure 1. La barre de tirage est formée de deux éléments 11 et 12, qui sont solidarisés l'un à l'autre, par exemple par collage ou par soudage, après avoir passé l'extrémité libre du rideau 13. Les crochets 14 et 15, d'une part, et la poignée 16, d'autre part, sont par exemple des pièces moulées rapportées respectivement sur les éléments 11 et 12.

De tels stores sont en particulier destinés à équiper la lunette arrière de véhicule automobile. L'invention concerne notamment, sans que cela soit limitatif, ce type de stores destinés aux lunettes arrière.

Comme cela apparaît sur la vue en coupe de la figure 2A, illustrant le store de la figure 1 en position déployée, la mise en place des crochets 14,15 oblige à forcer sur le tissu du rideau 13, du fait de l'angle α formé entre la barre 11, 12 et le rideau 13. Cependant, la position spécifique des crochets 14, 15 et de la poignée 16 (ou des positions similaires) sont nécessaires pour que, en position reployée, l'ensemble prenne une position voulue le long de la tablette (position dans laquelle il n'y a pas d'élément proéminent), ainsi que cela est illustré en figure 2B.

Plus généralement, les systèmes connus, tels qu'illustrés en figures 2A et 2B notamment, présentent l'inconvénient que la main de l'utilisateur voulant fixer le store en position déployée vient toujours prendre appui et déforrner le rideau, ce qui rend plus difficile l'accrochage.

Plus généralement encore, notamment lorsqu'il s'agit d'un store de lunette arrière, la manipulation est peu aisée, l'utilisateur devant se retourner, l'espace disponible au voisinage du pavillon étant le plus souvent très limité,... Ce problème est encore plus important, bien sûr, lorsque plusieurs personnes ont pris place sur la banquette arrière.

L'invention a notamment pour objectif de pallier ces inconvénients des techniques de l'art antérieur.

Plus précisément, un objectif de l'invention est de fournir un store à enrouleur, notamment pour lunette arrière, dont la manipulation, et en particulier la fixation, soit plus aisée, et plus confortable pour l'utilisateur, que les techniques connues.

Notamment, un objectif de l'invention est de fournir un tel store, évitant, ou limitant fortement, le frottement de la main contre le rideau du store, lors de sa fixation en position déployée.

Un autre objectif de l'invention est, bien sûr, de fournir un tel store, qui soit facile et peu coûteux à fabriquer. L'invention à notamment pour objectif de fournir un tel store qui présente les qualités requises, en matière d'ergonomie, de sécurité et de confort, en particulier lorsque le store est reployé.

Ces objectifs, ainsi que d'autres qui apparaîtront plus clairement par la suite, sont atteints à l'aide d'un store à enrouleur, du type comprenant un rideau de store monté sur un rouleau d'enroulement, l'extrémité libre dudit rideau étant équipée d'au moins une poignée et d'au moins un crochet de fixation. Selon l'invention, la ou lesdites poignées et le ou lesdits crochets sont libres en rotation par rapport à ladite extrémité libre du rideau, et indexés les uns par rapport aux autres, de façon qu'une rotation autour d'un axe correspondant sensiblement à ladite extrémité libre, imprimée par au moins une desdites poignées, entraîne la même rotation du ou desdits crochets, sans agir sensiblement sur la position dudit rideau.

Ainsi, selon l'invention, il est possible d'agir simplement et efficacement sur les crochets, en manipulant la poignée (ou les poignées), sans interagir avec, et donc sans forcer sur, le rideau. La main ne vient donc pas en contact avec ce rideau.

De plus, sur le plan esthétique, l'aspect du rideau déployé, notamment au niveau de l'accrochage, est amélioré.

Selon un mode de réalisation avantageux de l'invention, la ou lesdites poignées et le ou lesdits crochets sont indexés sur un élément longitudinal monté, libre en rotation, sur ladite extrémité libre.

Comme on le verra plus en détail par la suite, un tel store est en effet aisé à fabriquer et à monter.

De façon préférentielle, ledit élément longitudinal prend place dans un ourlet réalisé au niveau de ladite extrémité libre. Dans ce cas, des découpes peuvent être ménagées dans ledit ourlet, pour la ou lesdites poignées et le ou lesdits crochets.

Cet ourlet peut être réalisé classiquement, sous la forme d'un élément souple replié sur lui-même. Selon une variante avantageuse, ledit ourlet peut également être formé de deux pièces prévues pour être solidarisées l'une à l'autre en venant prendre en sandwich ladite extrémité libre du rideau.

Avantageusement, la ou lesdites poignées et/ou le ou lesdits crochets sont conformés de façon qu'ils ne présentent pas d'extrémités proéminentes, lorsque ledit store est en position enroulée.

Notamment, on peut prévoir que les poignées et les crochets viennent en contact avec la tablette du coffre arrière, de façon à limiter l'encombrement, supprimer les risques d'accrochage intempestif à un élément affleurant, et éviter tout bruit lorsque le store est enroulé.

En d'autres termes, on fait avantageusement en sorte que, lorsque ledit store est en position enroulée, lesdites extrémités soient simultanément en contact avec le support dudit store.

Selon un premier mode de réalisation avantageux de l'invention, la ou lesdites poignées et le ou lesdits crochets peuvent être formés dans une pièce unique.

Selon un second mode de réalisation avantageux de l'invention, on peut prévoir que la ou lesdites poignées et le ou lesdits crochets sont des pièces indépendantes indexées.

Avantageusement, le store de l'invention comprend une poignée unique, sensiblement en position centrale, et deux crochets répartis de part et d'autre de ladite poignée.

Cette solution est notamment bien adaptée aux stores destinées à équiper une lunette arrière.

L'invention concerne également un procédé de fabrication d'un store tel que décrit ci-dessus. Un tel procédé peut notamment comprendre les étapes suivantes :
- réalisation d'un ourlet à l'extrémité libre dudit rideau ;
- découpe d'encoches dans ledit ourlet ;
- insertion d'un élément longitudinal dans ledit ourlet ;
- montage sur ledit élément longitudinal, aux emplacements définis par lesdites encoches, de la ou desdites poignées et du ou desdits crochets.

Bien sûr, d'autres modes de fabrication peuvent également être envisagés.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi tesquets :
- la figure 1 illustre l'extrémité libre d'un store à enrouleur de type connu, déjà discuté en préambule ;
- les figures 2A et 2B, également discutées en préambule, montrent les crochets et la poignée du store de la figure 1, respectivement en position déployée et en position reployée ;
- la figure 3 présente un mode de réalisation avantageux d'un store à enrouleur selon l'invention ;
- les figures 4A et 4B présentent vu en coupe de façon similaire aux figures 2A et 2B, les crochets et poignée du store de la figure 3 ;
- les figures 5A et 5B illustrent un mode de réalisation de l'ourlet du store de la figure 3.

Comme indiqué précédemment, l'invention concerne donc un store à enrouleur dont l'extrémité libre du rideau est munie de poignée(s) et de crochet(s). Selon l'invention, lors du déroulement du store l'ensemble formé par les poignée(s) et crochet(s) s'oriente par rapport à l'axe défini par l'extrémité libre du rideau de façon liée en fonction de l'action de la main de l'utilisateur sur la poignée, sans agir (ou seulement très légèrement) sous la toile du rideau, au voisinage de son extrémité libre.

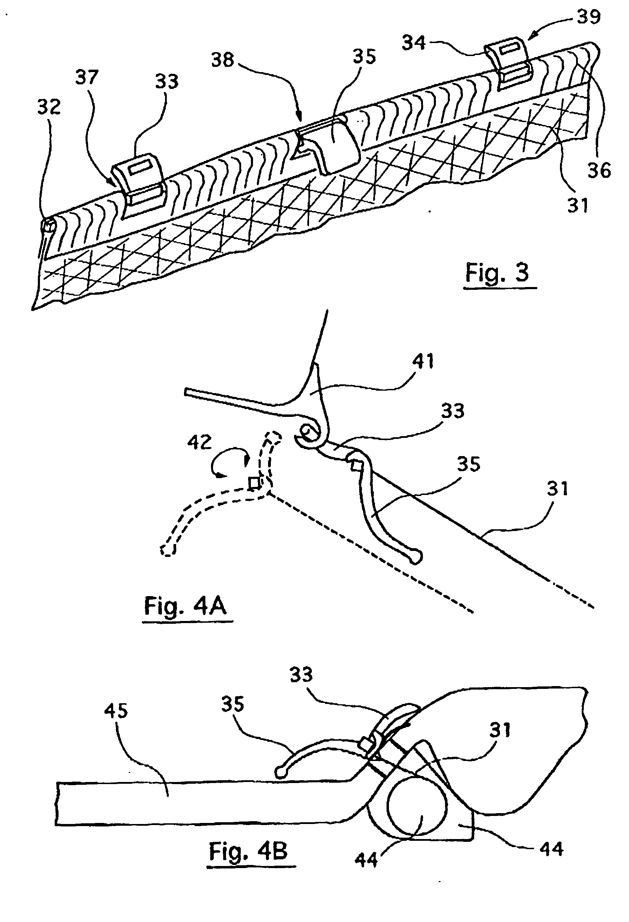

La figure 3 illustre un mode de réalisation préférentiel de l'invention. Plus précisément, cette figure 3 montre l'extrémité libre du rideau 31, et les moyens associés pour obtenir le résultat de l'invention.

Ces moyens comprennent une tige 32, avantageusement de section carrée. Sur cette tige sont montés de façon fixe (c'est-à-dire non mobile en rotation par rapport à la tige 32) :
- deux crochets ou attaches, 33 et 34, prévus pour coopérer avec des éléments d'accrochage complémentaires montés sur le véhicule ;
- une poignée, ou patte, 35.

Les crochets 33 et 34 et la poignée 35 sont donc indexés. Lorsque l'utilisateur imprime une rotation à la poignée 35 autour de l'axe défini par la tige carrée 32, les crochets 33 et 34 effectuent la même rotation.

La tige 32 est solidarisée à l'extrémité libre 31 du rideau du store par un ourlet 36, qui vient chevaucher la tige 32 et est solidarisée avec l'extrémité 31 du rideau par collage, soudage et/ou couture, ou tout autre moyen adéquat.

Des découpes 37, 38 et 39 sont réalisées dans l'ourlet pour permettre le passage des crochets 33 et 34 et de la poignée 35.

La barre de tirage est donc composée d'un ourlet 36, d'une tige carrée 32, de deux crochets 33, 34 et d'une poignée 35.

La fabrication et le montage de ces éléments sont donc relativement simples et rapides. A titre indicatif, il peut comprendre la succession des étapes suivantes :
- découpe de la bande formant le rideau ;
- peinture de la tige carrée 32 ;
- façonnage de l'ourlet 36 ;
- découpe des encoches 37, 38 et 39 sur l'ourlet 36, avantageusement en temps masqué lors de la soudure de l'autre extrémité du rideau au tube d'enroulement ;
- insertion de la tige 32 dans l'ourlet 36 ;
- assemblage des crochets 33 et 34 et de la poignée 35.

Bien sûr, de nombreuses variantes peuvent être envisagées, dans le mode de fabrication que dans les éléments mis en oeuvre. Ainsi, par exemple :
- l'ensemble formé par les crochets 33, 34 et la poignée 35 peut être formé dans une seule pièce monobloc par exemple en plastique moulé ;
- les crochets 33 et 38 peuvent être montés directement aux extrémités de la tige 32, la pièce correspondante formant alors également un bouchon d'extrémité ;
- l'ourlet 36 peut être réalisé directement dans le tissu du rideau replié autour de la tige 32 ;
- ...

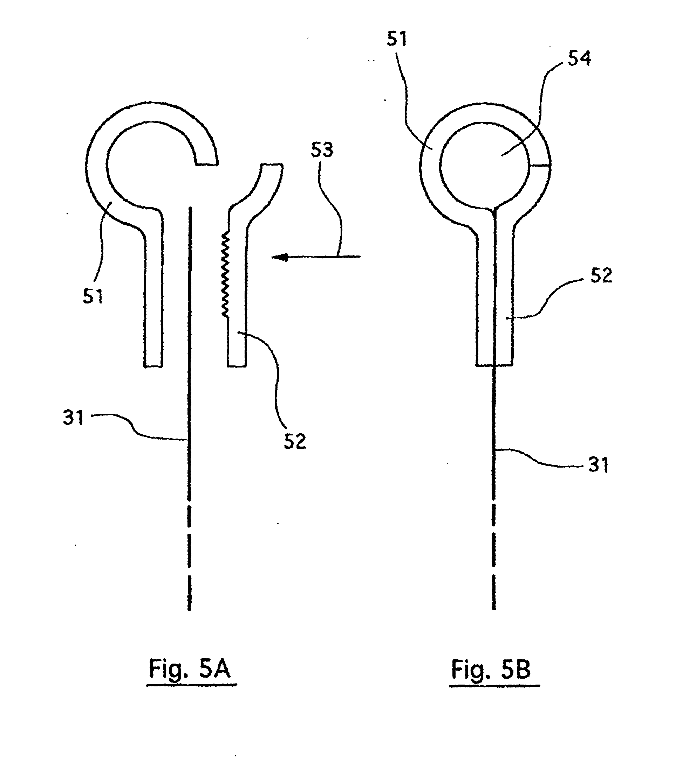

Selon une variante avantageuse, illustrée par les figures 5A et 5B, l'ourlet peut être formé de deux pièces 51 et 52, par exemple en matière plastique. Le montage est alors très simple, on place l'extrémité libre 31 entre les deux pièces 51 et 52, avant de solidariser ces dernières (53), par exemple par soudure (ou tout autre moyen adéquat).

L'ensemble ainsi formé (voir figure 5B) définit un logement 54, dans lequel la tige 32 peut prendre place. Bien sûr, des emplacements ont été prévus pour permettre la mise en place et le mouvement de la poignée 35 et des crochets 33, 34.

La figure 4A illustre le fonctionnement du mécanisme obtenu. Il s'agit d'une vue en coupe, sur laquelle on distingue la position accrochée (le rideau étant déployé), en traits pleins, et une position intermédiaire, en traits pointillés, illustrant le dispositif en cours d'accrochage.

On comprend que la mise en place du crochet 33 sur l'élément complémentaire 41 est particulièrement aisé pour l'utilisateur, puisque ce dernier le guide directement, en agissant directement sur la poignée 35. Le mouvement en rotation (flèche 42) de la poignée (et du crochet) n'agit pas sur le rideau 31.

Par ailleurs, ainsi que cela apparaît en pointillés, la poignée se trouve sensiblement perpendiculaire au rideau, lors des manipulations et de l'accrochage. Cette manipulation est donc plus aisée pour l'utilisateur, et sa main ne frotte pas contre le rideau 32.

A l'enroulement, tel qu'illustré en figure 4B, le rideau s'enroule automatiquement autour du tube 43, qui est monté dans un boîtier 44 fixé sous la tablette 45.

Les formes de la poignée 35 et des crochets 33 et 34 sont définies de façon que leurs extrémités respectives viennent en appui sur la tablette 45, lorsque le store est complètement enroulé. Ainsi plaqués contre la tablette 45, par la force de rappel, ces éléments sont immobilisés, et ne génèrent donc aucun bruit. Par ailleurs, aucune pièce proéminente n'apparaît. Au contraire, l'encombrement résultant est très réduit

## Revendications

1. Store à enrouleur, du type comprenant un rideau de store (31) monté sur un rouleau d'enroulement (43), l'extrémité libre dudit rideau étant équipée d'au moins deux éléments distincts, à savoir au moins une poignée (35) et au moins un crochet de fixation (33, 34), la ou lesdites poignées et le ou lesdits crochets étant indexés les uns par rapport aux autres, **caractérisé en ce que** la ou lesdites poignées et le ou lesdits crochets sont libres en rotation par rapport à ladite extrémité libre du rideau
de façon qu'une rotation (42) autour d'un axe correspondant sensiblement à ladite extrémité libre, imprimée par au moins une desdites poignées (35), entraîne la même rotation du ou desdits crochets (33, 34), sans agir sensiblement sur la position dudit rideau (31).

2. Store à enrouleur selon la revendication 1, **caractérisé en ce que** la ou lesdites poignées (35) et le ou lesdits crochets (3, 34) sont indexés sur un élément longitudinal (32) monté, libre en rotation, sur ladite extrémité libre.

3. Store à enrouleur selon la revendication 2, **caractérisé en ce que** ledit élément longitudinal (32) prend place dans un ourlet (36) réalisé au niveau de ladite extrémité libre.

4. Store à enrouleur selon la revendication 3, **caractérisé en ce que** des découpes (37, 38, 39) sont ménagées dans ledit ourlet (36), pour la ou lesdites poignées (35) et le ou lesdits crochets (33,34).

5. Store à enrouleur selon l'une quelconque des revendications 3 et 4, **caractérisé en ce que** ledit ourlet (36) est formé de deux pièces (51, 52) prévues pour être solidarisées l'une à l'autre en venant prendre en sandwich ladite extrémité libre du rideau.

6. Store à enrouleur selon l'une quelconque des revendications 1 à 5, **caractérisé en ce que** la ou lesdites poignées (35) et/ou le ou lesdits crochets (33, 34) sont conformés de façon qu'ils ne présentent pas d'extrémités proéminentes, lorsque ledit store est en position enroulée.

7. Store à enrouleur selon la revendication 6, **caractérisé en ce que**, lorsque ledit store est en position enroulée, lesdites extrémités sont simultanément en contact avec le support (45) dudit store.

8. Store à enrouleur selon l'une quelconque des revendications 1 à 7, **caractérisé en ce que** la ou lesdites poignées (35) et le ou lesdits crochets (33, 34) sont formés dans une pièce unique.

9. Store à enrouleur selon l'une quelconque des revendications 1 à 7, **caractérisé en ce que** la ou lesdites poignées (35) et le ou lesdits crochets (33,34) sont des pièces indépendantes indexées.

10. Store à enrouleur selon l'une quelconque des revendications 1 à 9, **caractérisé en ce qu'**il comprend une poignée unique (35), sensiblement en position centrale, et deux crochets (33, 34) répartis de part et d'autre de ladite poignée.

11. Procédé de fabrication d'un store selon l'une quelconque des revendications 1 à 10, **caractérisé en ce qu'**il comprend les étapes suivantes :
- réalisation d'un ourlet (36) à l'extrémité libre dudit rideau ;
- découpe d'encoches (37, 38, 39) dans ledit ourlet (36) ;
- insertion d'un élément longitudinal (32) dans ledit ourlet (36) ;
- montage sur ledit élément longitudinal, aux emplacements définis par lesdites encoches (37, 38, 39), de la ou desdites poignées (35) et du ou desdits crochets (33, 34).

## Patentansprüche

1. Rollo mit Aufrollmechanismus, das einen auf einer Aufrollwalze (43) aufgebrachten aufrollbaren Vorhang (31) aufweist, wobei das freie Ende dieses Vorhangs mindestens zwei verschiedene Elemente aufweist, nämlich mindestens einen Handgriff (35) und mindestens einen Befestigungshaken (33,34), wobei der Handgriff bzw. die Handgriffe und der bzw. die Haken im Verhältnis zueinander indiziert sind,
**dadurch gekennzeichnet, dass** der (die) Handgriff(e) und der (die) Haken sich frei gegenüber dem freien Ende des Vorhangs drehen können, so dass eine Drehbewegung (42) um eine in etwa dem besagten freien Ende entsprechende Achse, die durch mindestens einen der Handgriffe (35) induziert wird, den (die) Haken (33, 34) zur gleichen Drehbewegung antreibt, ohne in nennenswerter Weise auf die Position des Vorhangs (31) einzuwirken.

2. Rollo mit Aufrollmechanismus nach Anspruch 1,
**dadurch gekennzeichnet, dass** der (die) Handgriff(e) (35) und der (die) Haken (33, 34) über ein Längselement (32) indiziert sind, das frei drehbar am besagten freien Ende angebracht ist.

3. Rollo mit Aufrollmechanismus nach Anspruch 2,
**dadurch gekennzeichnet, dass** das Längselement (32) in einem am besagten freien Ende angefertigten Saum (36) eingelegt ist.

4. Rollo mit Aufrollmechanismus nach Anspruch 3,
**dadurch gekennzeichnet, dass** der Saum (36) Ausschnitte (37, 38, 39) aufweist, welche den (die) Handgriff(e) (35) und den (die) Haken (33, 34) durchlassen.

5. Rollo mit Aufrollmechanismus nach einem der Ansprüche 3 oder 4,
**dadurch gekennzeichnet, dass** der Saum (36) aus zwei Teilen (51, 52) gebildet wird, die so ausgelegt sind, dass, wenn sie zusammengefügt werden, das freie Ende des Vorhangs zwischen sich einschließen.

6. Rollo mit Aufrollmechanismus nach einem der Ansprüche 1 bis 5,
**dadurch gekennzeichnet, dass** der (die) Handgriff(e) (35) und/oder der oder die Haken (33,34) so ausgebildet sind, dass sie keine herausragenden Teile aufweisen, wenn das Rollo aufgerollt ist.

7. Rollo mit Aufrollmechanismus nach Anspruch 6,
**dadurch gekennzeichnet, dass**, wenn das Rollo aufgerollt ist, die erwähnten Enden gleichzeitig das Stützteil (45) des Rollos berühren.

8. Rollo mit Aufrollmechanismus nach einem der Ansprüche 1 bis 7,
**dadurch gekennzeichnet, dass** der (die) Handgriff(e) (35) und der (die) Haken (33, 34) aus einem einzigen Teil gebildet werden.

9. Rollo mit Aufrollmechanismus nach einem der Ansprüche 1 bis 7,
**dadurch gekennzeichnet, dass** der (die) Handgriff(e) (35) und der (die) Haken (33, 34) indexierte, unabhängige Teile sind.

10. Rollo mit Aufrollmechanismus nach einem der Ansprüche 1 bis 9,
**dadurch gekennzeichnet, dass** es einen einzigen, etwa in der Mitte angebrachten Handgriff (35) somie zwei Haken (33, 34) aufweist, die auf beiden Seiten des Handgriffs angebracht sind.

11. Herstellungsverfahren eines Rollos nach einem der Ansprüche 1 bis 10,
**dadurch gekennzeichnet, dass** es die folgenden Schritte umfasst:
- Ausführung eines Saums (36) am freien Ende des Vorhangs;
- Ausführung von Ausschnitten (37, 38, 39) in dem Saum (36);
- Einführung eines Längselementes (32) in den Saum (36);
- Anbringen auf dem Längselement, an den von den Ausschnitten (37, 38, 39) abgegrenzten Stellen, des Handgriffes bzw. der Handgriffe (35) und des Hakens bzw. der Haken (33, 34).

## Claims

1. Blind with a winding mechanism, said blind being of the type comprising a blind screen (31) which is mounted on a winding roller (43), the free end of the said screen being equipped with at least two distinct elements, namely at least one handle (35) and at least one fixing hook (33, 34), the said handle or handles and the said hook or hooks being indexed in relation to one another,
**characterised in that** the said handle or handles and the said hook or hooks are free in rotation in relation to the said free end of the screen,
in such a way that a rotation (42) about an axis substantially corresponding to the said free end, which rotation is transmitted by at least one of the said handles (35), brings about the same rotation of the said hook or hooks (33, 34) without having a substantial effect on the position of the said screen (31).

2. Blind with a winding mechanism according to Claim 1,
**characterised in that** the said handle or handles (35) and the said hook or hooks (33, 34) are indexed on a longitudinal element (32) which is mounted, so as to be free in rotation, on the said free end.

3. Blind with a winding mechanism according to Claim 2,
**characterised in that** the said longitudinal element (32) is located in a hem (36) produced at the said free end .

4. Blind with a winding mechanism according to Claim 3,
**characterised in that** cutouts (37, 38, 39) are arranged in the said hem (36) for the said handle or handles (35) and the said hook or hooks (33, 34).

5. Blind with a winding mechanism according to any of Claims 3 and 4,
**characterised in that** the said hem (36) is formed from two pieces (51, 52) which are intended to be attached to one another while sandwiching the said free end of the screen.

6. Blind with a winding mechanism according to any of Claims 1 to 5,
**characterised in that** the said handle or handles (35) and/or the said hook or hooks (33, 34) are shaped in such a way that they do not have projecting ends when the said blind is in the wound position.

7. Blind with a winding mechanism according to Claim 6,
**characterised in that**, when the said blind is in the wound position, the said ends are simultaneously in contact with the support (45) of the said blind.

8. Blind with a winding mechanism according to any of Claims 1 to 7,
**characterised in that** the said handle or handles (35) and the said hook or hooks (33, 34) are formed in a single piece.

9. Blind with a winding mechanism according to any of Claims 1 to 7,
**characterised in that** the said handle or handles (35) and the said hook or hooks (33, 34) are indexed independent pieces.

10. Blind with a winding mechanism according to any of Claims 1 to 9,
**characterised in that** said blind comprises a single handle (35), which is substantially in the central position, and two hooks (33, 34) distributed on either side of the said handle.

11. Method of manufacturing a blind according to any of Claims 1 to 10,
**characterised in that** said method comprises the following stages:
- the production of a hem (36) at the free end of the said screen;
- the cutting-out of notches (37, 38, 39) in the said hem (36);
- the insertion of a longitudinal element (32) in the said hem (36);
- the mounting of the said handle or handles (35) and of the said hook or hooks (33, 34) on the said longitudinal element at the locations defined by the said notches (37, 38, 39).
